# EUROPEAN PATENT SPECIFICATION

(11) **EP 3 580 454 B1**
(45) Date of publication and mention of the grant of the patent: **11.11.2020**
(21) Application number: 18704441.7
(22) Date of filing: 24.01.2018
(51) Int. Cl.: F03D 80/60

(54) **WIND TURBINE WASTE HEAT RECOVERY SYSTEM**
WINDTURBINENABWÄRMERÜCKGEWINNUNGSSYSTEM
SYSTÈME DE RÉCUPÉRATION DE CHALEUR RÉSIDUELLE D'ÉOLIENNE

(30) Priority: 03.04.2017 DE 102017205636
(43) Date of publication of application: 18.12.2019
(73) Proprietor: Siemens Gamesa Renewable Energy A/S, 7330 Brande (DK)
(72) Inventor: NESIC, Nikola, 7100 Vejle (DK)
(74) Representative: Aspacher, Karl-Georg
(86) International application number: PCT/EP2018/051700
(87) International publication number: WO 2018/184745

(56) References cited:
- EP-A1- 2 441 926
- WO-A1-2012/136243
- US-A1- 2016 201 650

## Description

The invention relates to a waste heat recovery system of a wind turbine.

In a wind turbine the energy of moving air is transformed into electrical energy. A wind turbine comprises a rotor that is connected to an electrical generator. The power generated by the electrical generator is transformed by a converter and a transformer system to adapt the electrical power to fit to the conditions of a power grid.

In addition, a wind turbine comprises various control systems and auxiliary systems like systems for cooling, dehumidifying, hydraulic, or pumps for lubrication, for example.

During the generation of electric energy, a certain amount of energy is transferred into waste heat. In addition, the systems for conversion or the electrical energy and the secondary systems necessary to operate the wind turbine, create waste heat.

The waste heat is mainly transferred to the ambient air or sea water around the wind turbine by heat exchangers and radiators.

A certain percentage of the power of the wind turbine is lost as waste heat to the environment.

US 2016/0201650 A1 discloses a wind power generating system including: a wind mill; an induction rotating machine coupled to a rotating shaft of the wind mill; a power converting device that supplies exciting current to the induction rotating machine; a heat medium circulating structure that circulates a heat medium that receives heat generated by the induction rotating machine; a heat accumulator that accumulates heat of the heat medium; a thermal power generator that converts, into electric power, the heat of the heat medium accumulated in the heat accumulator; and an armature control unit that controls the exciting current in accordance with electric power demand of an electric power system.

WO 2012/136243 A1 discloses a combined hydroelectric-thermoelectric power plant, wherein a hydroelectric power plant is thermally coupled to a thermoelectric power plant in order to recover waste heat produced in the hydroelectric power plant for electricity generation. Therein, a fraction of the water that propels turbines in the hydroelectric power plant is used as a heat sink and a thermoelectric generator is integrated in the heat-conducting wall of a lubricant oil-water heat exchanger so that a large temperature gradient across thermoelectric elements of the thermoelectric generator, and therefore a high efficiency can be obtained.

EP 2 441 926 A1 discloses an energy storage system comprising: a thermal storage circuit containing a thermal storage medium, the thermal storage circuit comprising a high temperature storage; one or more intermediate temperature storage and a low temperature storage connected together; a steam heat exchanger arrangement for heating a thermal storage medium flowing from the low temperature storage to the high temperature storage, wherein the thermal storage medium is heated with steam bled from a turbine of the power plant; a working fluid heat exchanger arrangement for heating a working fluid, the working fluid flowing through a low temperature working fluid heat exchanger; and a high temperature working fluid heat exchanger.

The aim of the invention is therefore to provide a wind turbine with increased efficiency.

The object of the invention is achieved by the independent claim 1. Further features of the invention are disclosed in the dependent claims.

A wind turbine is disclosed, comprising an electrical installation to transform wind energy into electrical energy, whereby the electrical installation produces waste heat.

The wind turbine comprises a waste heat recovery system to transform at least a part of the waste heat into electrical energy.

A waste heat recovery system is installed in the wind turbine to use the waste heat of components of the wind turbine and transfer the thermal energy into electrical energy.

Thus the efficiency of the wind turbine can be increased.

Electrical installations in the wind turbine that produce waste heat are a generator, a transformer, or a converter, for example.

Waste heat is thermal energy generated as a by-product in systems, whereby the thermal energy is un-wanted, and reduces the efficiency of the wind turbine.

A waste heat recovery system is using the un-wanted thermal energy to transform it into a form of energy that can be used in the wind turbine to increase the efficiency, like electrical energy, for example.

The wind turbine comprises a cooling system with a cooling circuit to cool the electrical installation that produces waste heat. The waste heat recovery system is connected to the cooling circuit of the wind turbine in a way that thermal energy is transferred from the cooling circuit to the waste heat recovery system.

Electrical installations are often cooled by cooling systems, to remove the un-wanted thermal energy. The cooling system has a cooling circuit. The cooling circuit can be a liquid filled cooling circuit or an air filled cooling circuit. The cooling system collects the thermal energy and transports it to a heat sink.

The waste heat recovery system is connected to the cooling circuit of the cooling system, so that the thermal energy is transferred to the waste heat recovery system.

The heat can be transferred to the waste heat recovery system by a heat exchanger, for example, whereby a first circuit of the heat exchanger is connected to the cooling system and a second circuit of the heat exchanger is connected to the waste heat recovery system.

The waste heat recovery system comprises a fluid circuit to transport thermal energy. The thermal energy of the cooling circuit of the wind turbine is transferred to a fluid in the fluid circuit of the waste heat recovery system.

The waste heat recovery system comprises a turbine to expand the fluid in the circuit of the waste heat recovery system, and to transform thermal energy of the fluid into rotational energy of the turbine.

The waste heat recovery system comprises a waste heat recovery generator to transform the rotational energy of the turbine into electrical energy.

The fluid in the circuit of the waste heat recovery system is heated by the waste heat of the electrical installations. The fluid can be a liquid or a gas under high pressure, that is in a liquid state.

The fluid of the waste heat recovery system is evaporated. The evaporated fluid is guided through a turbine, for example a steam turbine, where the energy of the fluid is transformed into rotational energy of the turbine.

An electrical generator is connected to the shaft of the turbine of the waste heat recovery system, so that the rotational energy of the turbine can be transferred into electrical energy.

The fluid circuit of the waste heat recovery system comprises a fluid, whereby the boiling temperature of the fluid is below 100°C.

The fluid used in the cooling system for the electrical installations of the wind turbine may comprise water or oil, for example, as a cooling liquid. The temperature of the liquid in this cooling circuit is kept below the temperature where the liquid would transform into steam. Thus for oil below the boiling temperature of the respective oil, which might be above 200°C, or for water below 100 °C.

The fluid used in the cooling system for the electrical installations of the wind turbine may be a gas, for example air. Also the gas as a cooling fluid is kept below a certain maximum temterature.

Thus the fluid of the waste heat recovery system is heated to a temperature below 100°C. To allow the turbine of the waste heat recovery system to operate, steam needs to be generated at a temperature below 100°C.

By selecting a respective fluid, the waste heat recovery system can be operated in a wind turbine with a, for example, water operated cooling system of the electrical installations.

The boiling temperature of the fluid is below 80°C and above 20°C.

A certain temperature difference between the fluid in the cooling system of the electrical installations and the waste heat recovery system is needed to heat the fluid of the waste heat recovery system and evaporate it.

Thus it is advantageous to select the fluid for the waste heat recovery system in a way that the boiling temperature of the fluid is below 80°C.

It should be above 20°C to allow the fluid to condense under normal ambient temperatures, thus extra cooling of the fluid is avoided.

The fluid is an organic liquid, and the process to transform the thermal energy into electrical energy is employing an Organic Rankine Cycle.

Organic fluids are known, that show the properties necessary to be used in a waste heat recovery system. The cycle used in the waste heat recovery system is an Organic Rankine Cycle, for example.

The waste heat recovery system comprises an evaporator to evaporate the fluid by the thermal energy transferred from the cooling circuit of the wind turbine.

Thermal energy of the cooling system of the electrical installations of the wind turbine is used to heat the organic liquid in the evaporator.

The gas is then used to accelerate the steam turbine present in the waste heat recovery system.

The waste heat recovery system comprises a condenser, to condense the fluid and to extract thermal energy from the fluid in the circuit.

After the fluid leaves the steam turbine of the waste heat recovery system, the fluid is cooled down to condensate again. A part of the thermal energy present in the fluid is removed, the fluid is cooled until the fluid completely condensed into a liquid again.

The fluid in its liquid form is them reused in the waste heat recovery system.

The waste heat recovery system comprises a pump to move the fluid in the fluid circuit of the waste heat recovery system.

The pump accelerates the fluid in its liquid form though the waste heat recovery system.

The fluid is carbon dioxide, and the process to transform the thermal energy into electrical energy is employing a Carbon Transcritical Power Cycle.

Carbon dioxide is used as a fluid in the waste heat recovery system. The carbon dioxide is hold under pressure in the waste heat recovery system to be in a liquid state when entering the heat exchanger.

Carbon dioxide can then be evaporated at temperatures below 100°C, preferably below 80°C. Carbon dioxide is easily available in nature, and will not harm the wind turbine or technicians present in the wind turbine in case of a failure and leakage.

The waste heat recovery system comprises a first heat exchanger that connects the cooling system of the wind turbine and the fluid circuit of the waste heat recovery system to transfer thermal energy from the cooling system to the fluid circuit.

The thermal energy is transferred from the fluid of the cooling system to the fluid of the waste heat recovery system in a heat exchanger. The carbon dioxide is heated and evaporated to create a gas to be used in the waste heat recovery cycle. The waste heat recovery system comprises a second heat exchanger, to transfer heat from the fluid after the exit of the turbine in flow direction of the fluid, to the fluid before the entrance of the first heat exchanger, to re-use the thermal energy present in the fluid circuit.

After the carbon dioxide leaves the turbine, it still comprises thermal energy. The carbon dioxide is then cooled to condensate. The condensed carbon dioxide is then returned to the heat exchanger though a pump.

A second heat exchanger is used in the cycle to transfer remaining heat from the fluid that leaves the turbine to the fluid before it enters the first heat exchanger, to preheat the fluid.

The first heat exchanger transfers the waste heat of the cooling system of the electrical installations to the fluid of the waste heat recovery system.

Thus even more remaining heat is reused, and the efficiency of the wind turbine is increased.

The wind turbine comprises a rotor and a wind turbine electrical generator that is connected to the rotor in a way that the rotational energy of the rotor is transferred to the electrical generator to transform wind energy into electrical energy, and the cooling system of the wind turbine cools the wind turbine electrical generator.

The electrical generator of the wind turbine is the major source of waste heat.

The waste heat of the electrical generator is reused to generate additional electrical energy, thus the efficiency of the wind turbine is increased.

The wind turbine comprises a nacelle, and the waste heat recovery system is located in the nacelle.

Thus the waste heat recovery system is arranged close to electrical installations creating waste heat, like the generator, the transformer, or electrical cabinets.

In addition, the waste heat recovery system can easily be accessed by service technicians for service and maintenance.

The nacelle comprises an housing, and thermal energy of the condenser of the waste heat recovery system is transferred to the environmental air by a cooler that is connected to the outside of the housing of the nacelle.

The fluid in the waste heat recovery system needs to be cooled to be condensed. A cooler is arranged outside the nacelle, to remove remaining waste heat. Ambient air cools the cooler, the ambient air moves along the cooler, when the wind blows and the wind turbine is in operation.

Thus ambient air is very efficient in cooling the fluid when the system is in operation.

The invention is shown in more detail by the help of figures. The figures show a preferred configuration and do not limit the scope of the invention.
- FIG 1: shows a wind turbine comprising a waste heat recovery system,
- FIG 2: shows a detailed embodiment of a wind turbine with a waste heat recovery system,
- FIG 3: shows a detailed view of the waste heat recovery system,
- FIG 4: shows an alternative embodiment of a waste heat recovery system.

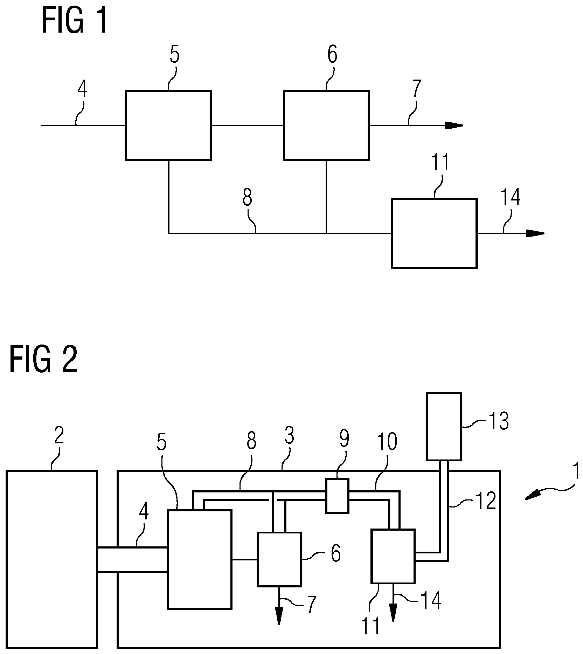

Figure 1 shows a wind turbine comprising a waste heat recovery system.

Figure 1 shows a wind turbine comprising a waste heat recovery system 11.

A wind turbine transforms rotational energy into electrical energy. Therefore, a shaft 4 is connected to an electrical generator 5. The electrical energy from the generator 5 is transformed in a converter or transformer 6 to achieve the electrical energy output 7 that is needed.

The electrical installations 5, 6 are cooled by a cooling system 8, using a liquid or air, for example. The cooling system is connected to the waste heat recovery system 11 that transforms the thermal energy of the cooling system 8 into electrical energy 14.

Thus, the waste heat of the electrical installations 5, 6 is used to generate additional electrical energy.

Figure 2 shows a detailed embodiment of a wind turbine with a waste heat recovery system.

The wind turbine 1 comprises a hub 2 and a nacelle 3. A rotor blade is connected to the hub 2 and the wind interacts with the rotor blade to cause a rotation of the hub 2 in respect to the nacelle 3. The rotation of the hub 2 is transferred by a shaft 4 to an electrical generator 5.

The electrical energy from the generator 5 is transferred to other electrical installations 6 to transform the electrical energy into the output power 7 needed. The electrical installations 5, 6 are cooled by a cooling circuit 8.

The cooling circuit 8 is connected by a heat exchanger 9 to the fluid circuit 10 of the waste heat recovery system 11. The waste heat recovery system 11 transforms the thermal energy transferred from the cooling system 8 into electrical energy 14.

A part of the remaining waste heat is transferred by a cooling circuit 12 to a cooler 13 that is arranged in a way that it can be cooled by environmental air in the vicinity of the nacelle 3 or by sea water.

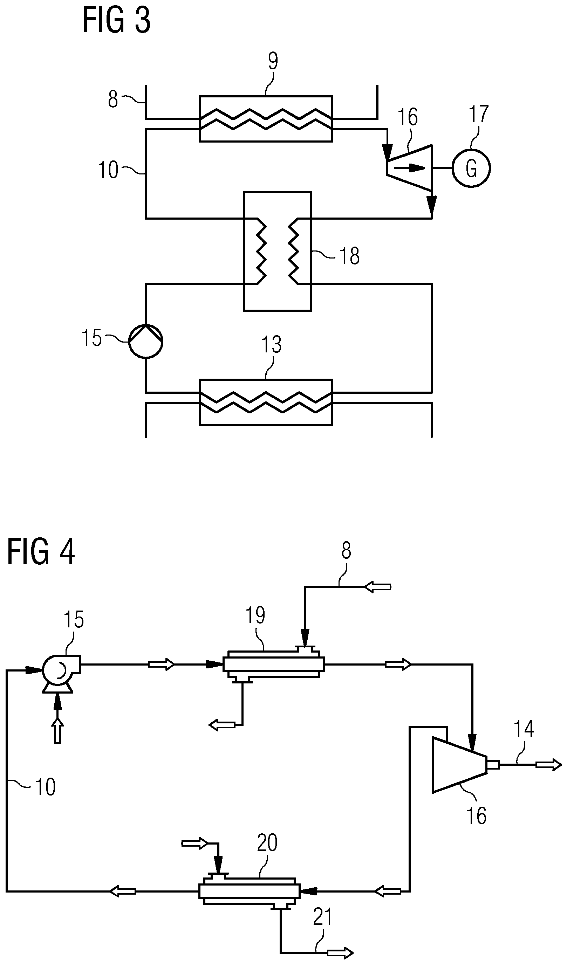

Figure 3 shows a detailed view of the waste heat recovery system.

The waste heat recovery system comprises a fluid circuit 10. The fluid in the fluid circuit 10 is carbon dioxide, for example.

A pump 15 moves the fluid in the fluid circuit 10. Waste heat is transferred to the waste heat recovery system by a cooling circuit 8 and a heat exchanger 9. The fluid in the fluid circuit 10 is heated by the thermal energy transferred from the cooling circuit 8.

The waste heat evaporates the fluid in the fluid circuit 10. The steam created in the heat exchanger 9 is expanded in a turbine 16. The thermal energy of the steam in the fluid circuit 10 is transformed into rotational energy of the turbine 16.

The rotational energy of the turbine 16 is transformed into electrical energy by the generator 17 of the waste heat recovery system.

The expanded steam of the cooling circuit 10 is condensed in a condenser 13. Thus, a part of the remaining thermal energy of the fluid in the fluid circuit 10 is removed by cooling the fluid.

The fluid then flows through the pump 15 towards the evaporator 9.

An additional internal heat exchanger 18 is present in the fluid circuit 10 to transfer a part of the remaining thermal energy of the steam after the expanded steam leaves the turbine 16 to the condensed fluid before it enters the evaporator 9.

The condenser 13 can be cooled by air, by sea water, or by an additional cooling circuit.

Figure 4 shows an alternative embodiment of a waste heat recovery system.

The waste heat recovery system comprises a fluid circuit 10. The fluid and the fluid circuit 10 is an organic liquid and the waste heat recovery system is using an Organic Rankine Cycle.

The pump 15 is present in the fluid circuit 10 to move the liquid in the fluid circuit. The fluid enters an evaporator 19, the waste heat is transferred by a cooling circuit 8 to the evaporator and is used to evaporate the liquid.

The steam of the organic liquid is expanded in a turbine 16. The thermal energy of the fluid in the fluid circuit 10 is transformed into rotational energy of the turbine 16 and into electrical energy 14 by a generator connected to the turbine 16.

The expanded steam of the fluid is condensed in a condenser 20. A part of the remaining thermal energy is removed from the fluid. The condenser 20 can be cooled by ambient air or by an additional cooling circuit removing the thermal energy 21.

After being condensed in the condenser 20, the fluid comes back to the pump 15 and returns to the evaporator 19.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention which remains defined by the appended claims.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Wind turbine (1), comprising
an electrical installation (5, 6) to transform wind energy into electrical energy (7), whereby the electrical installation (5, 6) produces waste heat,
a waste heat recovery system (11) to transform at least a part of the waste heat into electrical energy (14),
a cooling system with a cooling circuit (8) to cool the electrical installation (5, 6) that produces waste heat,
whereby the waste heat recovery system (11) is connected to the cooling circuit (8) of the wind turbine (1) in a way that thermal energy is transferred from the cooling circuit (8) to the waste heat recovery system (11), and
whereby the waste heat recovery system (11) comprises
- a fluid circuit (10) to transport thermal energy, whereby the thermal energy of the cooling circuit (8) of the wind turbine (1) is transferred to a fluid in the fluid circuit (10) of the waste heat recovery system (11),
- a turbine (16) to expand the fluid in the circuit (10) of the waste heat recovery system (11), and to transform thermal energy of the fluid into rotational energy of the turbine, and
- a waste heat recovery generator (17) to transform the rotational energy of the turbine (16) into electrical energy (14),
**characterized in that**
the fluid is carbon dioxide, and the process to transform the thermal energy into electrical energy is employing a Carbon Transcritical Power Cycle.

2. Wind turbine according to claim 1, whereby the fluid circuit (10) of the waste heat recovery system (11) comprises a fluid, whereby the boiling temperature of the fluid is below 100°C.

3. Wind turbine according to claim 2, whereby the boiling temperature of the fluid is below 80°C and above 20°C.

4. Wind turbine according to one of the claims 1 to 3, **characterized in that** the fluid is an organic liquid, and the process to transform the thermal energy into electrical energy is employing an Organic Rankine Cycle.

5. Wind turbine according to claim 4, whereby the waste heat recovery system (11) comprises an evaporator (19) to evaporate the fluid by the thermal energy transferred from the cooling circuit (8) of the wind turbine (1).

6. Wind turbine according to one of the claims 4 or 5, whereby the waste heat recovery system (11) comprises a condenser (20), to condense the fluid and to extract thermal energy from the fluid in the circuit (10).

7. Wind turbine according to any of the claims 4 to 6, whereby the waste heat recovery system (11) comprises a pump (15) to move the fluid in the fluid circuit (10) of the waste heat recovery system (11).

8. Wind turbine according to any of the claims 1 to 7, whereby the waste heat recovery system (11) comprises a first heat exchanger (9) that connects cooling circuit (8) of the wind turbine (1) and the fluid circuit (10) of the waste heat recovery system (11) to transfer thermal energy from the cooling system (8) to the fluid circuit (10).

9. Wind turbine according to one of the claims 1 to 8, whereby the waste heat recovery system (11) comprises a second heat exchanger (18), to transfer heat from the fluid after the exit of the turbine (16) in flow direction of the fluid, to the fluid before the entrance of the first heat exchanger (9), to re-use the thermal energy present in the fluid circuit (10).

10. Wind turbine according to any of the claims 1 to 9, whereby the wind turbine (1) comprises a rotor (2) and a wind turbine electrical generator (5) that is connected to the rotor (2) in a way that the rotational energy of the rotor (2) is transferred to the electrical generator (5) to transform wind energy into electrical energy (7), and the cooling circuit (8) of the wind turbine (1) cools the wind turbine electrical generator (5).

11. Wind turbine according to any of the claims 1 to 10, whereby the wind turbine (1) comprises a nacelle (3), and the waste heat recovery system (11) is located in the nacelle (3).

12. Wind turbine according to claim 11, whereby the nacelle (3) comprises an housing, and thermal energy of the condenser (20) of the waste heat recovery system (11) is transferred to the environmental air by a cooler (13) that is connected to the outside of the housing of the nacelle.

## Patentansprüche

1. Windenergieanlage (1), die Folgendes umfasst:
eine elektrische Anlage (5, 6) zum Umwandeln von Windenergie in elektrische Energie (7), wobei die elektrische Anlage (5, 6) Abwärme erzeugt,
ein Abwärmerückgewinnungssystem (11) zum Umwandeln zumindest eines Teils der Abwärme in elektrische Energie (14),
ein Kühlsystem mit einem Kühlkreislauf (8) zum Kühlen der elektrischen Anlage (5, 6), die Abwärme erzeugt,
wobei das Abwärmerückgewinnungssystem (11) so mit dem Kühlkreislauf (8) der Windenergieanlage (1) verbunden ist, dass Wärmeenergie vom Kühlkreislauf (8) auf das Abwärmerückgewinnungssystem (11) übertragen wird, und
wobei das Abwärmerückgewinnungssystem (11) Folgendes umfasst:
- einen Fluidkreislauf (10) zum Transportieren von Wärmeenergie, wobei die Wärmeenergie des Kühlkreislaufs (8) der Windenergieanlage (1) auf ein Fluid im Fluidkreislauf (10) des Abwärmerückgewinnungssystems (11) übertragen wird,
- eine Turbine (16) zum Expandieren des Fluids im Kreislauf (10) des Abwärmerückgewinnungssystems (11) und zum Umwandeln von Wärmeenergie des Fluids in Rotationsenergie der Turbine und
- einen Abwärmerückgewinnungsgenerator (17) zum Umwandeln der Rotationsenergie der Turbine (16) in elektrische Energie (14),
**dadurch gekennzeichnet, dass**
es sich bei dem Fluid um Kohlendioxid handelt und der Prozess zum Umwandeln der Wärmeenergie in elektrische Energie mit einem Kreisprozess mit überkritischem Kohlenstoff arbeitet.

2. Windenergieanlage nach Anspruch 1, wobei der Fluidkreislauf (10) des Abwärmerückgewinnungssystems (11) ein Fluid umfasst, wobei die Siedetemperatur des Fluids unter 100°C liegt.

3. Windenergieanlage nach Anspruch 2, wobei die Siedetemperatur des Fluids unter 80°C und über 20°C liegt.

4. Windenergieanlage nach einem der Ansprüche 1 bis 3,
**dadurch gekennzeichnet, dass** es sich bei dem Fluid um ein organisches Fluid handelt und der Prozess zum Umwandeln der Wärmeenergie in elektrische Energie mit einem Organic Rankine Cycle arbeitet.

5. Windenergieanlage nach Anspruch 4, wobei das Abwärmerückgewinnungssystem (11) einen Verdampfer (19) zum Verdampfen des Fluids durch die vom Kühlkreislauf (8) der Windenergieanlage (1) übertragene Wärmeenergie umfasst.

6. Windenergieanlage nach einem der Ansprüche 4 und 5, wobei das Abwärmerückgewinnungssystem (11) einen Verflüssiger (20) zum Verflüssigen des Fluids und zum Extrahieren von Wärmeenergie aus dem Fluid im Kreislauf (10) umfasst.

7. Windenergieanlage nach einem der Ansprüche 4 bis 6, wobei das Abwärmerückgewinnungssystem (11) eine Pumpe (15) zum Bewegen des Fluids im Fluidkreislauf (10) des Abwärmerückgewinnungssystems (11) umfasst.

8. Windenergieanlage nach einem der Ansprüche 1 bis 7, wobei das Abwärmerückgewinnungssystem (11) einen ersten Wärmetauscher (9) umfasst, der den Kühlkreislauf (8) der Windenergieanlage (1) und den Fluidkreislauf (10) des Abwärmerückgewinnungssystems (11) zum Übertragen von Wärmeenergie aus dem Kühlsystem (8) auf den Fluidkreislauf (10) umfasst.

9. Windenergieanlage nach einem der Ansprüche 1 bis 8, wobei das Abwärmerückgewinnungssystem (11) einen zweiten Wärmetauscher (18) umfasst, der Wärme von dem Fluid nach dem Austritt aus der Turbine (16) in Strömungsrichtung des Fluids auf das Fluid vor dem Eintritt des ersten Wärmetauschers (9) überträgt und so die im Fluidkreislauf (10) vorhandene Wärmeenergie erneut nutzt.

10. Windenergieanlage nach einem der Ansprüche 1 bis 9, wobei die Windenergieanlage (1) einen Rotor (2) und einen elektrischen Windenergieanlagengenerator (5) umfasst, der so mit dem Rotor (2) verbunden ist, dass die Rotationsenergie des Rotors (2) auf den elektrischen Generator (5) übertragen und so Windenergie in elektrische Energie (7) umgewandelt wird, und der Kühlkreislauf (8) der Windenergieanlage (1) den elektrischen Windenergieanlagengenerator (5) kühlt.

11. Windenergieanlage nach einem der Ansprüche 1 bis 10, wobei die Windenergieanlage (1) eine Gondel (3) umfasst und sich das Abwärmerückgewinnungssystem (11) in der Gondel (3) befindet.

12. Windenergieanlage nach Anspruch 11, wobei die Gondel (3) ein Gehäuse umfasst und Wärmeenergie des Verflüssigers (20) des Abwärmerückgewinnungssystems (11) durch eine Kühlvorrichtung (13), die mit der Außenseite des Gehäuses der Gondel verbunden ist, auf die Umgebungsluft übertragen wird.

## Revendications

1. Éolienne (1), comprenant
une installation électrique (5, 6) pour transformer l'énergie éolienne en énergie électrique (7), moyennant quoi l'installation électrique (5, 6) produit de la chaleur perdue,
un système de récupération de chaleur perdue (11) pour transformer au moins une partie de la chaleur perdue en énergie électrique (14),
un système de refroidissement avec un circuit de refroidissement (8) pour refroidir l'installation électrique (5, 6) qui produit de la chaleur perdue,
moyennant quoi le système de récupération de chaleur perdue (11) est raccordé au circuit de refroidissement (8) de l'éolienne (1) de manière à ce que l'énergie thermique soit transférée du circuit de refroidissement (8) au système de récupération de chaleur perdue (11), et
moyennant quoi le système de récupération de chaleur perdue (11) comprend
- un circuit de fluide (10) pour transporter l'énergie thermique, moyennant quoi l'énergie thermique du circuit de refroidissement (8) de l'éolienne (1) est transférée à un fluide dans le circuit de fluide (10) du système de récupération de chaleur perdue (11),
- une turbine (16) pour détendre le fluide dans le circuit (10) du système de récupération de chaleur perdue (11), et pour transformer l'énergie thermique du fluide en énergie de rotation de la turbine, et
- un générateur de récupération de chaleur perdue (17) pour transformer l'énergie de rotation de la turbine (16) en énergie électrique (14),
**caractérisée en ce que**
le fluide est du dioxyde de carbone, et le processus de transformation de l'énergie thermique en énergie électrique utilise un Cycle d'Énergie Transcritique du Carbone.

2. Éolienne selon la revendication 1, dans laquelle le circuit de fluide (10) du système de récupération de chaleur perdue (11) comprend un fluide, moyennant quoi la température d'ébullition du fluide est inférieure à 100°C.

3. Éolienne selon la revendication 2, dans laquelle la température d'ébullition du fluide est inférieure à 80°C et supérieure à 20°C.

4. Éolienne selon l'une des revendications 1 à 3, **caractérisée en ce que** le fluide est un liquide organique, et le processus de transformation de l'énergie thermique en énergie électrique utilise un Cycle de Rankine Organique.

5. Éolienne selon la revendication 4, dans laquelle le système de récupération de chaleur perdue (11) comprend un évaporateur (19) pour évaporer le fluide par l'énergie thermique transférée du circuit de refroidissement (8) de l'éolienne (1).

6. Éolienne selon l'une des revendications 4 ou 5, dans laquelle le système de récupération de chaleur perdue (11) comprend un condenseur (20), pour condenser le fluide et pour extraire l'énergie thermique du fluide dans le circuit (10).

7. Éolienne selon l'une des revendications 4 à 6, dans laquelle le système de récupération de chaleur perdue (11) comprend une pompe (15) pour déplacer le fluide dans le circuit de fluide (10) du système de récupération de chaleur perdue (11).

8. Éolienne selon l'une des revendications 1 à 7, dans laquelle le système de récupération de chaleur perdue (11) comprend un premier échangeur de chaleur (9) qui raccorde le circuit de refroidissement (8) de l'éolienne (1) et le circuit de fluide (10) du système de récupération de chaleur perdue (11) pour transférer l'énergie thermique du système de refroidissement (8) au circuit de fluide (10).

9. Éolienne selon l'une des revendications 1 à 8, dans laquelle le système de récupération de chaleur perdue (11) comprend un deuxième échangeur de chaleur (18), pour transférer la chaleur du fluide après la sortie de la turbine (16) dans la direction d'écoulement du fluide, au fluide avant l'entrée du premier échangeur de chaleur (9), pour réutiliser l'énergie thermique présente dans le circuit de fluide (10).

10. Éolienne selon l'une des revendications 1 à 9, dans laquelle l'éolienne (1) comprend un rotor (2) et un générateur électrique (5) d'éolienne qui est raccordé au rotor (2) de manière à ce que l'énergie de rotation du rotor (2) soit transférée au générateur électrique (5) pour transformer l'énergie éolienne en énergie électrique (7), et le circuit de refroidissement (8) de l'éolienne (1) refroidit le générateur électrique (5) d'éolienne.

11. Éolienne selon l'une des revendications 1 à 10, dans laquelle l'éolienne (1) comprend une nacelle (3), et le système de récupération de chaleur perdue (11) est situé dans la nacelle (3).

12. Éolienne selon la revendication 11, dans laquelle la nacelle (3) comprend un boîtier, et l'énergie thermique du condenseur (20) du système de récupération de chaleur perdue (11) est transférée à l'air ambiant par un refroidisseur (13) qui est raccordé à l'extérieur du boîtier de la nacelle.
